# EUROPÄISCHE PATENTANMELDUNG

(11) **EP 1 447 164 A1**
(43) Veröffentlichungstag der Anmeldung: **18.08.2004**
(21) Anmeldenummer: 04000798.1
(22) Anmeldetag: 16.01.2004
(51) Int. Cl.: B23K 9/095, B23K 9/18, B23K 9/04

(54) **Verfahren und Vorrichtung zum Schweissen oder Beschichten von Werkstücken**

(30) Priorität: 07.02.2003 AT 1942003
(71) Anmelder: MCE VOEST GmbH & Co., 4031 Linz (AT)
(72) Erfinder: Drab, Ernst, Ing., 4560 Kirchdorf (AT)
(74) Vertreter: VA TECH Patente GmbH & Co

(57) **Zusammenfassung**

Die Erfindung betrifft ein Verfahren und eine Vorrichtung zum Schweißen oder Beschichten von Werkstücken mit ebenen oder gekrümmten Oberflächen unter Verwendung eines Schweißverfahrens.

Für die Einstellung der Eigenschaften in einer Schweißspur bzw. einer aufgetragenen Schicht ist es nötig die Zielzusammensetzung in der Schweißspur sehr präzise einzuhalten. Dazu wird vorgeschlagen zumindest einen Schweißparameter, wie z.B. die Menge an Zusatzwerkstoff, anzupassen, wobei dies auf Basis einer gemessenen Zusammensetzung der Schweißspur erfolgt. Lösungen dazu sehen eine Anpassung der Schweißzusatzwerkstoffe entsprechend eine Zielzusammensetzung vor.

## Beschreibung

Die Erfindung betrifft ein Verfahren und eine Vorrichtung zum Schweißen oder Beschichten von Werkstücken mit ebenen oder gekrümmten Oberflächen unter Verwendung eines Schweißverfahrens.

Schweißverfahren werden in einer Vielzahl technischer Lösungen als wichtiges Konstruktionselement eingesetzt, sowohl als Verfahren zum Verbinden von Bauteilen, als auch für Reparaturschweißungen oder zur lokalen Veränderung von Bauteiloberflächen.

Eine bekannte Lösung zur Veränderung von Bauteiloberflächen bieten Auftragsschweißverfahren, die in einem breiten Feld Anwendung finden. Ziel bei diesen Verfahren ist es, eine Beschichtung mit konstanter und möglichst genauer Zusammensetzung einzustellen, wobei bestimmte mechanische, physikalische oder sonstige Eigenschaften wie z.B. die Korrosionseigenschaften eingestellt werden. Typische Verfahren verlangen enge Toleranzen hinsichtlich der Zusammensetzung der Schweißspur von ± 0.5% Legierungselementgehalt um die geforderten Eigenschaften mit geringen Schwankungen zu erreichen.

Viele technische Anwendungen sehen die Beschichtung eines Grundwerkstoffs mit einer Funktionsschicht vor, die entsprechend der Anwendung gewählt wird, um die benötigten Eigenschaften zu erfüllen. Auf Basis eines Grundwerkstoffes können verschiedene Einsatzgebiete erschlossen werden, indem über die Beschichtung die Anforderungen an die Bauteiloberfläche erfüllt werden. Anwendungen dazu sind z.B. die Beschichtung von Rollen in metallurgischen Anlagen, die hohen korrosiven, thermischen oder mechanischen Belastungen oder auch Kombinationen derartiger Belastungen ausgesetzt sind. Als Oberflächenschicht wird eine entsprechend legierte Schutzschicht aufgebracht, die den Belastungen standhält und dabei technisch brauchbare Standzeiten sicherstellt.

Neben dieser Forderung stellt vor allem die Schweißleistung, oder die Beschichtungsleistung im Falle einer Auftragsschweißung, eine wesentliche Größe dar. Unter Beschichtungsleistung versteht man die beschichtete Oberfläche pro Zeiteinheit. Hohe Beschichtungsmengen werden angestrebt, um so die Prozesszeiten zu verkürzen und die Kapazitäten zu erhöhen.

Das Unterpulverschweißverfahren ist eine bekannte Lösung und wird der Forderung nach hohen Beschichtungsleistungen gerecht. Aus dem Stand der Technik, z.B. der WO 98/12010, ist es bekannt, dass neben einer drahtförmigem Elektrode (auch Heizdraht genannt) ein legierter, pulverförmiger Zusatzwerkstoff eingebracht wird. Durch dieses Verfahren gelingt es höhere Beschichtungsleistungen zu erreichen.

Grundsätzlich ist zu bemerken, dass die Zusammensetzung der Schweißspur bzw. der Beschichtung durch das zu beschichtende Grundmaterial, den Heizdraht und bei Verfahren mit Pulver durch den pulverförmigen Zusatzwerkstoff definiert wird. Dabei hängt die Zusammensetzung neben dem Schweißstrom (in Ampere) unter anderem von der Zufuhrgeschwindigkeit des Heizdrahtes, der Fördermenge an Zusatzwerkstoff und der aufgeschmolzenen Menge an Grundwerkstoff ab, wobei diese Größen als Schweißparameter bezeichnet werden.

Aus der DD 278.746 A1 ist eine Einrichtung zur Bahnsteuerung von Schweißgeräten bekannt. Neben einer Modellierung und der Berechung der Zusammensetzung der Schweißspur, wird durch einen Soll-Istwert-Vergleich auf Basis einer Messung, zur Beeinflussung der Zusammensetzung in der Schweißspur, eine seitliche Auslenkung des Schweißbrenners durchgeführt.

Verfahren mit hoher Schweiß- bzw. Beschichtungsleistung verursachen prozessbedingt einen hohen Energieeintrag in das Werkstück. Ein hoher Energieeintrag in das Werkstück ist nachteilig, da dadurch eine größere Wärmeeinflusszone (Heat affected zone HAZ) und ein gröberes Gefüge im Bereich der Schweißung eingestellt werden. Weiters bedeutet ein hoher Energieeintrag eine signifikante thermische Belastung für das Werkstück und eine stetige Erhöhung der Werkstücktemperatur während der Behandlung. Bei höherfesten bzw. bei temperaturempfindlichen Werkstoffen stellt dies eine große Gefahr dar, da Schäden, hervorgerufen durch Thermospannungen, auftreten können.

Darüber hinaus wird, durch die sich verändernde Temperatur des Werkstückes, auch die Zusammensetzung der Schweißspur, bedingt durch eine größere Menge an aufgeschmolzenem Grundmaterial, verändert, wodurch auch Abweichungen von der Sollzusammensetzung der Schweißspur und damit der Konzentration an Legierungselementen auftreten können. Derartige Abweichungen können z.B. bei rostfreien Stählen zu lokal verringerten Chrom- bzw. Chrom-Nickelgehalten und damit zu lokalen Korrosionsschäden führen, da eine hinreichende Passivierung nicht mehr gegeben ist.

Aufgabe der Erfindung ist es, ein Verfahren zum Schweißen bzw. zum Beschichten weiterzuentwickeln, das bei einer hohen Schweiß- bzw. Beschichtungsleistung eine präzise Einstellung der Zusammensetzung der Schweißspur über den gesamten Prozess hinweg ermöglicht.

Die Aufgabe wird entsprechend dem erfindungsgemäßen Verfahren nach dem kennzeichnenden Teil des Anspruchs 1 gelöst. Durch das erfindungsgemäße Verfahren wird eine präzise Einstellung der Legierungszusammensetzung in der Schweißspur bzw. in der Schweißbeschichtung erreicht. Dies wird auch unter extremen Bedingungen erreicht, wenn, wie im Falle eines Beschichtungsprozesses, längere Schweißzeiten nötig sind und der Energieeintrag in das Werkstück groß ist.

Durch das erfindungsgemäße Verfahren kann einerseits eine Sollzusammensetzung der Schweißspur bzw. der Beschichtung gleich bleibend sichergestellt werden und andererseits der Einsatz von Schweißzusatzwerkstoffen optimiert werden und zu hohe Legierungselementgehalte bzw. zu hohe Verbräuche von Zusatzwerkstoffen vermieden werden. Dies stellt einen sehr wichtigen Vorteil dar, da teure, hoch legierte Zusatzwerkstoffe sehr effizient eingesetzt werden können.

Eine Ausführungsform der Erfindung sieht die Anpassung der Schweißparameter über die Fördermenge an pulverförmigem Zusatzwerkstoff vor. Durch eine gezielte Abstimmung der Fördermenge kann die Legierungszusammensetzung in hohem Maße, also unter sehr unterschiedlichen Schweißprozessbedingungen, eingestellt bzw. konstant gehalten werden. Darüber hinaus kann durch die Wahl der Pulverzusammensetzung Einfluss genommen werden.

Nach dem erfindungsgemäßen Verfahren wird die Anpassung mindestens eines Schweißparameters Online durchgeführt, das bedeutet, dass der Parameter während des Schweißprozesses variiert bzw. eingestellt wird. Unter Schweißparameter werden die das Verfahren beeinflussenden Größen, wie z.B. der Schweißstrom oder die Zuführmenge eines Zusatzwerkstoffes, verstanden.

Nach einer besonderen Ausführungsform des erfindungsgemäßen Verfahrens wird als Schweißverfahren ein Unterpulverschweißverfahren mit drahtförmiger Elektrode und pulverförmigem Zusatzwerkstoff angewendet. Der Zusatzwerkstoff ist neben dem Grundwerkstoff des Werkstücks und der Elektrode auch Träger der Legierungselemente, sodass im Zusammenwirken von Grundwerkstoff, der Elektrode und des pulverförmigen Zusatzwerkstoffes die gewünschte Zusammensetzung in der Schweißspur bzw. der aufgetragenen Schicht erreicht wird.

Das erfindungsgemäße Verfahren sieht die Bestimmung der Zusammensetzung der Schweißspur oder auch der aufgeschweißten Schicht durch zumindest eine Messung vor. Diese Messung kann als Information für die Steuerung des Schweißprozesses herangezogen werden. Abhängig vom Schweißverfahren kann daraufhin über die jeweiligen Prozessparameter die Zusammensetzung der Schweißspur oder der Beschichtung gezielt beeinflusst werden, sodass eine Sollzusammensetzung eingehalten wird.

Nach einer vorteilhaften Ausführungsform der Erfindung erfolgt die Anpassung des Schweißprozesses über die Einstellung der Vorschubgeschwindigkeit der drahtförmigen Elektrode, wobei diese relativ zum Schweißstrom, der Menge an Zusatzwerkstoff, der gewünschten Schweißbadgröße und der Zielzusammensetzung erfolgt. Unter Schweißbadgröße versteht man das Volumen an aufgeschmolzenem Grundund Zusatzwerkstoffen. Durch diese Anpassung gelingt es das Mengenverhältnis zwischen drahtförmiger Elektrode und pulverförmigem Zusatzwerkstoff einzustellen. Diese vorteilhaft einfache Ausführungsform gestattet eine kostengünstige Lösung, wobei während des laufenden Schweißprozesses nur ein Steuereingriff über die drahtförmige Elektrode nötig ist. Mit dieser einfachen Ausführungsform kann die aufgabengemäße Einstellung der Legierungszusammensetzung im Schweißbad und damit in der Schweißspur bzw. der aufgetragenen Schicht erreicht werden.

Eine sehr flexible Ausführungsform des Verfahrens sieht eine kombinierte Variation der Vorschubgeschwindigkeit der Elektrode und der Fördermenge des Zusatzwerkstoffes vor. Durch diese Lösung kann ein besonders breiter Parameterbereich beim Schweißverfahren eingestellt werden, sodass auch sehr starke Änderungen während des Prozesses abgedeckt werden können. Damit gelingt es geringe Abweichungen der Zusammensetzung der Schweißspur bzw. der aufgetragenen Schicht von einer Sollzusammensetzung einzuhalten.

Bei der Beschichtung von gekrümmten Oberflächen muss der Schweißstrom und damit die Schmelzbadgröße entsprechend gewählt werden, damit insbesondere bei stark gekrümmten Flächen kein Abtropfen von flüssigem Material aus dem Schmelzbad erfolgt. Durch die angeführte Einstellung des Schweißstroms, gelingt es, im Zusammenwirken mit den beschriebenen Maßnahmen die Zusammensetzung der Schweißspur sehr präzise bei einer Sollzusammensetzung zu halten.

Nach einer besonders wirtschaftlichen Ausführungsform des erfindungsgemäßen Verfahrens erfolgt die Ermittlung der Zusammensetzung der Schweißspur nachfolgend an den Schweißvorgang durch eine Messung. Durch diese nachfolgende Messung ist es möglich einfache Standardmessverfahren einzusetzen. Die Messergebnisse können als Basisgröße für die Steuerung der Schweißparameter einer nachfolgenden Schweißung herangezogen werden.

Eine Onlinemessung, also wenigstens eine Messung während des Schweißprozesses, gestattet eine Einstellung der Schweißparameter auf Basis der unmittelbar gemessenen Zusammensetzung im Schweißgut. Damit ist eine sehr genaue Einstellung der Zusammensetzung in der Schweißspur möglich, da durch die Messung eine Rückmeldung während des Schweißverfahrens vorliegt, die für die Einstellung der Schweißparameter herangezogen werden kann. Insbesondere Änderungen während des Schweißprozesses an einem Werkstück können damit sicher berücksichtigt werden, sodass auch höchsten Anforderungen Rechnung getragen werden kann.

Das erfindungsgemäße Verfahren sieht in einer besonderen Ausführungsform eine Messung der Zusammensetzung der Schweißspur mittels Spektrometer vor. Durch die Anwendung dieses Messprinzips wird eine sehr präzise Erfassung der Legierungselementgehalte als Basis für die Anpassung des Verhältnisses von drahtförmiger Elektrode und pulverförmigem Zusatzwerkstoff erreicht. Spektrometrische Messverfahren sind technisch ausgereifte Verfahren und eignen sich für die Bestimmung der Zusammensetzung von Legierungen sehr gut.

Nach einer weiteren Ausführungsform des erfindungsgemäßen Verfahrens wird die Zusammensetzung der Schweißspur konstant gehalten. Dies ist insbesondere von großer Bedeutung bei großflächigen Beschichtungen, da bereits geringe Abweichungen von der Sollzusammensetzung zu unzulässigem Oberflächeneigenschaften führen können. Durch das Verfahren wird auch bei langen Prozesszeiten sichergestellt, dass die gewünschte Legierung an der Schweißspur bzw. der Beschichtung eingestellt wird.

Die erfindungsgemäße Vorrichtung besteht aus der Schweißvorrichtung, einer Messeinrichtung zur Ermittlung der Zusammensetzung der Schweißspur und wenigstens einer steuerbaren Zuführvorrichtung für einen Zusatzwerkstoff, sodass eine gezielte Einflussname auf die Zusammensetzung möglich wird. Die gemessene Zusammensetzung kann als Steuergröße für die Schweißvorrichtung und die Zuführvorrichtung herangezogen werden. Durch die Verbindung der Schweißvorrichtung mit einer Messeinrichtung wird eine zusätzliche Funktionalität geschaffen, die eine wesentliche Voraussetzung für das erfindungsgemäße Verfahren und den damit verbesserten Verfahrensergebnissen darstellt. Die gemessenen Zusammensetzungen stellen eine Information dar, die in Relation mit den Verfahrensparametern der Schweißvorrichtung bzw. der Zuführvorrichtung gebracht werden können und für die Steuerung der Schweißvorrichtung herangezogen werden können. Durch eine präzise Bemessung der Zusatzwerkstoffe auf Basis der Zusammensetzung der Schweißspur sind Zielzusammensetzungen sehr gut reproduzierbar einstellbar.

Eine Ausführungsform des Verfahrens sieht die Verwendung einer Messeinrichtung nach dem spektrometrischen Prinzip vor. Diese Lösung basiert auf einem bekannten und technisch weit entwickelten Prinzip, sodass eine sichere Messung sichergestellt ist.

Nach einer besonderen Ausführungsform der erfindungsgemäßen Vorrichtung besitzt die Schweißvorrichtung Zuführvorrichtungen, über die draht- oder pulverförmige Zusatzwerkstoffe dem Schweißprozess gesteuert zuführbar sind. Durch die Anordnung von zwei Zuführvorrichtungen kann die Zusammensetzung des Zusatzwerkstoffes und der Schweißspur sehr gut beeinflusst werden. Insbesondere für Unterpulverschweißverfahren bietet diese Ausführung der Vorrichtung eine hohe Flexibilität für die Anwendung im Schweißverfahren.

Das erfindungsgemäße Verfahren und die erfindungsgemäße Vorrichtung eignen sich sehr gut für Auftragsschweißverfahren auf Basis eines Unterpulverschweißverfahrens. Durch die verfahrensbedingten Zusatzwerkstoffe, bestehend aus der drahtförmigen Schweißelektrode und dem pulverförmigen Zusatzwerkstoff, ist durch die Abstimmung der beiden Zusatzwerkstoffe zueinander und relativ zu weiteren Schweißparametern, wie z.B. dem Schweißstrom, eine sehr präzise Einstellung der Zielzusammensetzung der aufgetragenen Schicht möglich. Die Kombination der Schweißvorrichtung, die zwei Zuführvorrichtungen für die drahtförmige Elektrode und den pulverförmigen Zusatzwerkstoff aufweist, mit einer Messeinrichtung, zur Bestimmung der Zusammensetzung in der Schweißspur, ermöglicht eine hohe Reproduzierbarkeit und die Einhaltung der Zielzusammensetzung mit sehr geringen Schwankungen. Durch die Abstimmung der Zusatzwerkstoffe relativ zueinander und zum Grundwerkstoff, dessen Aufschmelzmenge über den Schweißstrom definiert wird, wird das angegebene vorteilhafte Verfahrensergebnis erreicht.

Eine konkrete Anwendung des erfindungsgemäßen Verfahrens und der Vorrichtung ergibt sich für die Beschichtung von Rollgangs- oder auch Führungsrollen für metallurgische Anlagen, wie z.B. Stranggießanlagen. Dabei wird eine Schutzschicht oder auch Funktionsschicht auf eine Rolle aufgebracht, wobei entsprechende thermische oder korrosionsrelevante Eigenschaften eingestellt werden. Es ist nötig die Legierungselementgehalte entsprechend zu wählen, wobei nicht nur die absoluten Gehalte, sondern erst im Zusammenwirken mit anderen Legierungselementen die Wirkung entfaltet wird. Es ist bekannt dies mit Schaeffler-Diagrammen bzw. mit Cr-Äquivalenten zu beschreiben, wobei die Legierungselemente entsprechend Ihrer bekannten Wirkung mit einem Multiplikator gewichtet werden.

Ein wesentliches Legierungselement zur Einstellung gewünschter Korrosionseigenschaften stellt Chrom (Cr) dar. Im folgenden Ausführungsbeispiel wird die Einstellung der Legierung am Bsp. des Legierungselements Cr erläutert.

Auf Basis eines Unterpulverschweißverfahrens, das einen drahtförmigen und einen pulverförmigen Zusatzwerkstoff vorsieht, wird mittels des erfindungsgemäßen Verfahrens und der Vorrichtung die Schweißspur festgelegt. Die Zusammensetzung der Schweißspur wird derart eingestellt, dass diese zu etwa 25% aus dem Werkstoff der zu beschichtenden Rolle und zu 75% aus den Zusatzwerkstoffen besteht. Der Grundwerkstoff ist meist ein niedrig legierter Vergütungsstahl, der nur geringe Gehalte an Legierungselementen, wie z.B. Cr enthält.

Die Zusatzwerkstoffe werden üblicherweise in einem Verhältnis von 60% pulverförmigem Zusatzwerkstoff und 40% drahtförmigem Zusatzwerkstoff eingestellt. Typische Cr-Gehalte des hochlegierten Pulvers liegen bei 27%. Der drahtförmige Zusatzwerkstoff ist zumeist niedrig legiert, kann aber nach Bedarf auch höher legiert gewählt werden. Durch die Mischungsverhältnisse und die Aufschmelzung ergibt sich damit ein Cr-Gehalt in der Schweißspur von etwa 12%.

Damit dieses Verhältnis auch konstant und sicher eingehalten werden kann, wird das Verhältnis der Zusatzwerkstoffe relativ zueinander angepasst. Dies erfolgt durch eine Anpassung der Fördermenge des Pulvers während des Verfahrens. Gesteuert wird diese Anpassung aufgrund von Messungen der Schweißspurzusammensetzung, wobei eine gemessene Analyse der Schweißspur die Legierungselementgehalte bestimmt. Es ist aber auch möglich nur Indikatoren, also einen wesentlichen Vertreter der Legierungselemente zu messen und für die weitere Bearbeitung heranzuziehen. Als Messverfahren werden dabei z.B. spektrometrische Verfahren eingesetzt, wobei die spezifische Wechselwirkung eines Legierungselementes als Information für dessen Mengenanteil in der Legierung herangezogen wird.

Aus dieser Information und weiteren Schweißparametern wie z.B. Schweißstrom, Fördermengen der Zusatzwerkstoffe, Werkstücktemperatur und weiteren kann ein Zusammenhang zwischen Zusammensetzung und Parameter hergestellt werden, der zur gezielten Beeinflussung der Schweißspur nutzbar ist. Aus diesem Zusammenhang kann auch während des Schweißvorgangs gezielt Einfluss genommen werden, wobei die Zusatzwerkstoffe relativ zueinander angepasst werden. Dies erfolgt z.B. über die erfindungsgemäße Zuführvorrichtung, die eine Anpassung der Pulvermenge ermöglicht.

Die Messung kann während des Schweißens aber auch unmittelbar danach erfolgen, wobei stets eine Rückmeldung erreicht wird. Durch die beschriebenen Maßnahmen wird also während des Schweißens eingegriffen und so gezielt eine Zielzusammensetzung in der Schweißspur eingehalten. Bei größeren zu beschichtenden Flächen ist dieses erfindungsgemäße Verfahren eine geeignete Lösung, um die Zielzusammensetzung sicher einzuhalten.

## Patentansprüche

1. Verfahren zum Schweißen oder Beschichten von Werkstücken mit ebenen oder gekrümmten Oberflächen unter Verwendung eines Schweißverfahrens, wobei die Zusammensetzung der Schweißspur bzw. der Beschichtung auf Basis zumindest einer Messung und durch Anpassung zumindest eines Schweißparameters eingestellt wird, **dadurch gekennzeichnet, dass** die Einstellung der Zusammensetzung unter Verwendung zumindest eines Zusatzwerkstoffs, dessen Menge entsprechend angepasst wird, erfolgt.

2. Verfahren nach Anspruch 1, **dadurch gekennzeichnet, dass** als Schweißverfahren ein Unterpulverschweißverfahren mit drahtförmiger Elektrode und pulverförmigem und/ oder legiertem Zusatzwerkstoff angewendet wird.

3. Verfahren nach einem der obigen Ansprüche, **dadurch gekennzeichnet, dass** die Anpassung des Schweißparameters Online erfolgt.

4. Verfahren nach einem der obigen Ansprüche, **dadurch gekennzeichnet, dass** der Elektrodenvorschub und/ oder die Menge an Zusatzwerkstoff entsprechend angepasst wird.

5. Verfahren nach einem der obigen Ansprüche, **dadurch gekennzeichnet, dass** die Messung nachfolgend zum Schweißvorgang erfolgt.

6. Verfahren nach einem der obigen Ansprüche, **dadurch gekennzeichnet, dass** die Messung online erfolgt.

7. Verfahren nach einem der obigen Ansprüche, **dadurch gekennzeichnet, dass** die Messung nach dem spektrometrischen Messprinzip erfolgt.

8. Verfahren nach einem der obigen Ansprüche, **dadurch gekennzeichnet, dass** die Zusammensetzung der Schweißspur bzw. der Beschichtung konstant gehalten wird.

9. Vorrichtung zum Schweißen oder Beschichten von Werkstücken mit ebenen oder gekrümmten Oberflächen bestehend aus einer Schweißvorrichtung zum Schweißen bzw. Beschichten von Oberflächen und einer Messeinrichtung zur Ermittlung der Zusammensetzungen der Schweißspur bzw. der aufgebrachten Schicht, wobei die von der Messeinrichtung ermittelten Zusammensetzungen für die Schweißvorrichtung als Steuergrößen verwendbar sind, **dadurch gekennzeichnet, dass** die Schweißvorrichtung zumindest eine Zuführvorrichtung für einen Schweißzusatzwerkstoff aufweist, wobei diese unter Verwendung der ermittelten Zusammensetzungen steuerbar ist.

10. Vorrichtung nach Anspruch 9, **dadurch gekennzeichnet, dass** die Messeinrichtung dem Messprinzip einer spektrometrischen Messung entspricht.

11. Vorrichtung nach Anspruch 9, **dadurch gekennzeichnet, dass** die Zuführvorrichtung für drahtförmige oder pulverförmige Zusatzwerkstoffe vorgesehen ist.
